# EUROPÄISCHE PATENTSCHRIFT

(11) **EP 0 759 134 B1**
(45) Veröffentlichungstag und Bekanntmachung des Hinweises auf die Patenterteilung: **05.01.2000**
(21) Anmeldenummer: 95918591.9
(22) Anmeldetag: 22.04.1995
(51) Int. Cl.: F16L 55/11, F16B 4/00

(54) **VERSCHLUSSVORRICHTUNG UND VERFAHREN ZUM VERSCHLIESSEN VON DRUCKMITTEL FÜHRENDEN KANÄLEN IN EINEM GEHÄUSE**
CLOSURE DEVICE AND METHOD FOR CLOSING DUCTS WHICH CONVEY PRESSURE MEDIUM IN A HOUSING
SYSTEME D'OBTURATION ET PROCEDE POUR OBTURER DES CONDUITES DE FLUIDES SOUS PRESSION DANS UN BOITIER

(30) Priorität: 02.05.1994 DE 4415341
(43) Veröffentlichungstag der Anmeldung: 26.02.1997
(73) Patentinhaber: Continental Teves AG & Co. oHG, 60488 Frankfurt (DE)
(72) Erfinder: VOGEL, Günther, D-63303 Dreieich (DE); VOLZ, Peter, D-64291 Darmstadt (DE)
(86) Internationale Anmeldenummer: EP9501532
(87) Internationale Veröffentlichungsnummer: WO9530108

(56) Entgegenhaltungen:
- EP-A- 0 411 215
- WO-A-91/10071
- DE-C- 538 132
- DE-U- 8 716 060
- US-A- 1 929 824
- US-A- 2 138 404
- US-A- 3 387 735
- US-A- 4 726 401

## Beschreibung

Die Erfindung betrifft eine Verschlußvorrichtung zum Verschließen von Druckmittel führenden Kanälen in einem Gehäuse nach dem Oberbegriff des Anspruchs 1.

Aus der Druckschrift DE-GM 87 16 060 ist bereits eine solche Verschlußvorrichtung zum Abschließen von Druckmittel führenden Bohrungen oder Kanälen hervorgegangen, die durch einen in eine Stufenbohrung eingepreßten Schließkörper eine formschlüssige Verbindung mit dem Gehäuse bildet. Das den Formschluß bewirkende Grundmaterial der Stufenbohrung wird in eine Einformung zwischen zwei den beiden Bohrungsabschnitten entsprechenden Kolbenabschnitte am Schließkörper plastisch verdrängt, wodurch die Befestigung und Abdichtung des Schließkörpers in der Gehäusebohrung zustandekommt.

Da die Halte- und Dichtwirkung des Schließkörpers im Gehäuse durch den an der Innenfläche des Schließkörpers anstehenden Betriebsdruck festgelegt ist, genügt die eingangs beschriebene Befestigung des Schließkörpers nicht allen Anwendungsfällen. Insbesondere bei Verschlußkappen oder deckelförmigen Schließkörpern, die eine relativ große dem Betriebsdruck ausgesetzte Stirnfläche aufweisen und unter Hochdruck stehen, ist ein Lösen des Schließkörpers aus seiner mittels Selbstverstemmung hergestellten Befestigung nicht auszuschließen, wodurch nicht nur mit Undichtigkeit, sondern mit einem völligen Funktionsausfall des Schließkörpers zu rechnen ist.

Aus der US-A-3387735 geht ein Verschlußkörper zum Verschließen einer Gehäuseöffnung hervor, der mittels unterschiedlich groß ausgeführter Kolbenquerschnitte beim Eindringen in die Gehäuseöffnung das Gehäusematerial in eine zwischen den beiden Kolbenquerschnitte gelegene Ringnut plastisch verdrängt. An der Außenfläche des Verschlußkörpers ist ferner eine Fase angebracht, die vom verstemmten Material der Gehäuseöffnung überdeckt ist. Der Verschlußkörper ist damit durch die Kombination einer Selbstverstemmstelle mit einer Außenverstemmstelle in der Gehäuseöffnung befestigt.
Hiervon unterscheidet sich jedoch der nunmehr beanspruchte Erfindungsgegenstand ganz erheblich, da am Verschlußkörper keine Außenverstemmung des Gehäusematerials vorgesehen ist, sondern der äußere Bohrungsabschnitt des Gehäuses eine Ausnehmung mit einer Stützfläche aufweist, in die mittels einer Aufspreizung eine Stützfläche des Schließkörpers eingreift.

In der EP-A-0 411 215 wird vorgeschlagen, einen dünnwandigen Verschlußkörper innerhalb einer Gehäuseöffnung an einer Ringschulter zu befestigen. Die Ringschulter ist von einer Ausnehmung in der Gehäuseöffnung begrenzt, in die beim Einführen eines Verstemmwerkzeuges der stegförmige Randbereich des dünnwandigen Verschlußkörpers -ohne Einwirkung einer Radialkraft- in die Ausnehmung plastisch verformt einfließt.

Daher ist es die Aufgabe der Erfindung, eine Verschlußvorrichtung zum Verschließen von Druckmittel führenden Kanälen in einem Gehäuse zu schaffen, die sich durch eine besonders sichere Befestigung und Abdichtung des Schließkörpers im Gehäuse auszeichnet, wobei hierzu ein geeignetes Befestigungsverfahren anzugeben ist.

Diese Aufgabe wird erfindungsgemäß im wesentlichen durch die kennzeichnenden Merkmale des Patentanspruchs 1 und 4 gelöst, wonach an dem von der Druckmittelseite abgewandten äußeren Bohrungsabschnitt wenigstens eine Stützfläche vorgesehen ist, die Bestandteil einer Ausnehmung im Gehäuse ist, an der eine zur Gehäuseaußenseite gerichtete Stützfläche des Schließkörpers mittels einer Aufspreizung anliegt und wobei gemäß dem kennzeichnenden Merkmal des Verfahrens mittels einer auf den Schließkörper einwirkenden Einpreßkraft definierten Richtung und Größe der Schließkörper zunächst eine in den Kanal gerichtete Vorschubbewegung vollzieht, um das an der Einformung des Schließkörpers den plastischen Formschluß bewirkende Gehäusematerial unter Kraftwirkung am Schließkörper in die Einformung zu verdrängen und wobei in einem weiteren Verfahrensschritt eine zur Gehäuseaußenfläche gerichtete Stützfläche am Schließkörper in eine Ausnehmung am äußeren Bohrungsabschnitt aufgespreizt wird.

Von besonderem Vorteil ist es, daß die am äußeren Bohrungsabschnitt gelegene Stützfläche sich je nach Anwendungsfall relativ einfach mittels spanloser oder spanabhebender Fertigung herstellen läßt.

Um eine sichere und dennoch einfache Kontaktierung der am äußeren Bohrungsabschnitt gelegenen Stützfläche mit der Stützfläche des Schließkörpers zu ermöglichen, ist gemäß Anspruch 2 vorgsehen, daß die am äußeren Bohrungsabschnitt gelegene Stützfläche von einem am Schließkörper angebrachten Kragen Kontaktiert ist. Der Kragen weist im Hinblick auf die Kräfteübertragung vom Schließkörper auf die Stützfläche am Gehäuse ein entsprechend hohes Widerstandsmoment auf und ist fertigungstechnisch leicht herzustellen.

Gemäß bevorzugten Merkmalen ist vorgesehen, den Kragen in Richtung der Ausnehmung aufzuweiten, damit abhängig von der Größe der Aufspreizung des Kragens eine mehr oder weniger direkte Einleitung einer Haltekraft des Schließkörpers in die Ausnehmung zustande kommt.

Es wird eine redundante Befestigung geschaffen, die sich durch die Kombination eines Selbstverstemmvorganges mit einem sich anschließenden Spreizvorganges auszeichnet. Der Spreizvorgang kann bei entsprechender Werkstoffauswahl und Stützflächengestaltung am Schließkörper selbsttätig erfolgen.

Eine zweckmäßige Ausgestaltung des Verfahrens, wird durch die Merkmale des Anspruchs 5 erläutert, wonach der am Schließkörper angeformte Kragen durch ein an seinem Innenrand angelegtes Werkzeug in Richtung der Ausnehmung im Gehäuse plastisch aufgeweitet wird, bis der die Stützfläche aufweisende Kragen an der Ausnehmung anliegt. Die Aufspreizung des Kragens kann in zulässigen Grenzen variiert werden, so daß bei Bedarf eine die Selbstverstemmung am Schließkörper entlastende Vorspannkraft am Kragen eingestellt werden kann.

Weitere Ziele, Merkmale, Vorteile und Anwendungsmöglichkeiten der vorliegenden Erfindung ergeben sich aus der nachfolgenden Beschreibung eines Ausführungsbeispiels anhand einer Zeichnung.

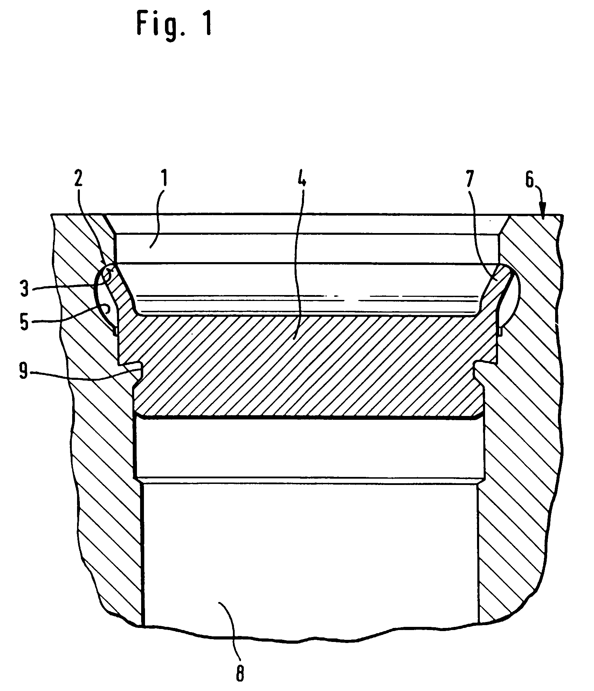

Die Fig. 1 zeigt schematisch die erfindungsgemäß vorgeschlagene Verschlußvorrichtung, die einen im Profilschnitt im wesentlichen topfförmigen Querschnitt eines Schließkörpers 4 zeigt, der mittels einer Selbstverstemm- und Spreizbefestigung in einer Stufenbohrung angebracht ist. Die Selbstverstemmstelle zwischen der Gehäusebohrung und dem Schließkörper 4 ist durch das in eine Einformung 9 am Schließkörper 4 plastisch verdrängte Material des Gehäuses 6 dargestellt. Der Schließkörper 4 weist beiderseits der Einformung 9 an den äußeren Bohrungsabschnitt 1 und ein den inneren Bohrungsabschnitt 8 entsprechend angepaßte Kolbenabschnitte mit unterschiedlich großen Durchmessern auf, die während des Einpreßvorganges des Schließkörpers 4 in die Stufenbohrung den Umformvorgang des Gehäusewerkstoffes in die Einformung 9 begünstigen. Die Einformung 9 ist vergleichbar mit einer hohlkehlenförmigen am Schließkörper 4 umlaufenden Ausnehmung, die außer der Haltekraft eine metallische Abdichtung bewirkt. Der im Bereich des äußeren Bohrungsabschnitts 1 am Schließkörper 4 angeformte Rand bildet einen Kragen 7, dessen Stirnfläche in der Funktion einer Stützfläche 3 in der bogenförmigen Ausnehmung 5 des äußeren Bohrungsabschnittes 1 anliegt. Der Kragen 7 ist im aufgespreizten Zustand gezeigt, indem ein Bogenabschnitt in der Ausnehmung 5 als Stützfläche 2 zur Übertragung der Haltekraft (Axialkraft) beiträgt. Die Ausnehmung 5 im Gehäuse 6 ist gleichfalls wie die Einformung 9 am Schließkörper 4 in gewissen Grenzen hinsichtlich der Geometrie frei wählbar, so daß sich hinsichtlich der Gestaltung der im äußeren Bohrungsabschnitt 1 eingebrachten Ausnehmung 5 gewisse geometrische Änderungen zulässig sind. Die Aufspreizung des Kragens 7 ist derart zu wählen, daß unter allen Betriebsumständen die Dichtwirkung des Gehäusewerkstoffes in der Einformung 9 erhalten bleibt, weshalb die Stützfläche 3 am Kragen 7 in erster Linie zur Kraftübertragung beitragen soll. Im Grenzfall muß daher sichergestellt sein, daß ein etwaiges zwischen der Stützfläche 3 am Kragen 7 und der Stützfläche 2 am Gehäuse 6 verbliebenes Minimalspiel nach der Aufspreizung derart klein zu bemessen ist, daß eine etwaige durch den hohen hydraulischen Betriebsdruck hervorgerufene Verformung der Selbstverstemmstelle durch rechtzeitige Abstützwirkung des Kragens 7 in der Ausnehmung 5 aufgefangen wird, um Undichtigkeiten an der Selbstverstemmstelle zu verhindern. Von daher ist es zweckmäßig, die Aufspreizung des Kragens 7 so weit vorzunehmen, daß bereits eine statische Vorspannkraft zwischen den Stützflächen 2 des Gehäuses 6 und des Schließkörpers 4 wirksam ist. Eine nachträgliche Lüftbewegung des Schließkörpers 4 ist hierdurch verhindert. Eine hohe mechanische Beanspruchung des Kragens 7 ist durch dessen im wesentlichen rechteckförmiger Querschnitt gewährleistet, der in Richtung der Vertikalachse ein entsprechend großes Flächenträgheitsmoment hat. Durch entsprechende Werkstoffauswahl und Formgebung des Schließkörpers 4 ist folglich der Spreizvorgang des Kragens 7 nicht zwingend auf einen extern einzuleitenden Umformvorgang beschränkt, sondern kann selbsttätig erfolgen. Der Kragen 7 muß daher nicht, wie in der Abbildung gezeigt, eine am Umfang weitgehend geschlossene Einheit bilden, kann somit zungenförmig gestaltet sein.

Hinsichtlich den verfahrenstechnischen Merkmalen der Erfindung gilt es zu beachten, daß durch die Kombination einer Selbstverstemmstelle mit einem homogen am Schließkörper 4 angebrachten Spreizverschluß einerseits ein relativ einfach herzustellendes rotationssymmetrisches Bauteil geschaffen ist, das in einem ersten Verfahrensschritt lediglich in die mit einer Ausnehmung 5 versehenen Stufenbohrung des Gehäuses 6 einzupressen ist, bis das Gehäusematerial die Einformung 9 am Schließkörper 4 zur Erzeugung einer Halte- und Dichtkraft entsprechend ausformt, wobei durch ein anschließendes Aufweiten des zunächst geradlinig verlaufenden und an den Innendurchmesser des äußeren Bohrungsabschnitts 1 angepaßten Kragens 7 eine zusätzliche Haltesicherung für den Schließkörper 4 in der Bohrung geschaffen ist.

Durch die vorgeschlagenen baulichen und verfahrenstechnischen Merkmale ist somit eine hochbeanspruchbare Verschlußvorrichtung zum Verschließen von Druckmittel führenden Bohrungen oder Kanälen geschaffen, die auf das Erfordernis separater Abdicht- und Haltemaßnahmen verzichten kann.

### Bezugszeichenliste

- 1: Bohrungsabschnit
- 2: Stützfläche
- 3: Stützfläche
- 4: Schließkörper
- 5: Ausnehmung
- 6: Gehäuse
- 7: Kragen
- 8: Bohrungsabschnitt
- 9: Einformung

## Patentansprüche

1. Verschlußvorrichtung, bestehend aus einem in einen Kanal eines Gehäuses (6) eingepreßten Schließkörper (4), an dessen Außenumfang wenigstens eine Einformung (9) angeordnet ist, in die beim Einpressen des Schließkörpers (4) in den Kanal Grundmaterial des Gehäuses (6) zur Bildung eines Formschlusses verdrängt ist, wobei der Kanal als Stufenbohrung ausgebildet ist, dessen von der Druckmittelseite abgewandter, äußerer Bohrungsabschnitt (1) mit größerem Durchmesser über einen Absatz in einen der Druckmittelseite zugewandten inneren Bohrungsabschnitt (8) mit kleinerem Durchmesser übergeht und wobei der Schließkörper (4) zwei den beiden Bohrungsabschnitten (1,8) entsprechende Kolbenabschnitte mit unterschiedlich großen Durchmessern aufweist, zwischen denen die relativ zum kleineren Durchmesser hinterschnittene Einformung (9) ausgebildet ist, in die durch plastische Verformung das den Formschluß bewirkende Grundmaterial gepreßt ist, dadurch **gekennzeichnet,** daß an dem von der Druckmittelseite abgewandten äußeren Bohrungsabschnitt (1) wenigstens eine Stützfläche (2) vorgesehen ist, die Bestandteil einer Ausnehmung (5) im Gehäuse (6) ist, an der mittels einer Aufspreizung eine zur Gehäuseaußenseite gerichtete Stützfläche (3) des Schließkörpers (4) anliegt.

2. Verschlußvorrichtung nach Anspruch 1, dadurch **gekennzeichnet,** daß die am äußeren Bohrungsabschnitt (1) gelegene Stützfläche (2) von einem am Schließkörper (4) angebrachten Kragen (7) kontaktiert ist, dessen Stirnfläche die Stützfläche (3) des Schließkörpers (4) bildet.

3. Verschlußvorrichtung nach Anspruch 2, dadurch **gekennzeichnet,** daß der Kragen (7) in die Ausnehmung (5) eingreift.

4. Verfahren zum Verschließen von Druckmittel führenden Kanälen in einem Gehäuse (6) durch ein in einem Kanal einzupressenden Schließkörper (4), an dessen Außenumfang wenigstens eine Einformung (9) angeordnet ist, in die beim Einpressen des Schließkörpers (4) in den Kanal Grundmaterial des Gehäuses (6) zur Bildung eines Formschlusses verdrängt wird, wobei der Kanal als Stufenbohrung ausgebildet ist, dessen von der Druckmittelseite abgewandter äußerer Bohrungsabschnitt (1) mit größerem Durchmesser über einen Absatz in einen der Druckmittelseite zugewandten inneren Bohrungsabschnitt (8) mit kleinerem Durchmesser übergeht und wobei der Schließkörper (4) zwei den beiden Bohrungsabschnitten entsprechende Kolbenabschnitte mit unterschiedlich großen Durchmessern aufweist, zwischen denen die relativ zum kleineren Durchmesser hinterschnittene Einformung (9) ausgebildet ist, in die durch plastische Verformung das den Formschluß bewirkende Grundmaterial eingepreßt wird, wobei der Schließkörper (4) unter Einwirkung einer Einpreßkraft definierter Richtung und Größe eine in den inneren Bohrungsabschnitt (8) gerichtete Vorschubbewegung vollzieht, und das an der Einformung (9) des Schließkörpers (4) den plastischen Formschluß bewirkende Gehäusematerial unter Kraftwirkung am Schließkörper (4) in die Einformung (3) verdrängt wird, dadurch **gekennzeichnet,** daß anschließend eine zur Gehäuseaußenseite gerichtete Stützfläche (3) am Schließkörper (4) in eine Ausnehmung (5) am äußeren Bohrungsabschnitt (1) aufgespreizt wird.

5. Verfahren nach Anspruch 4, dadurch **gekennzeichnet,** daß die zur Gehäuseaußenseite gerichtete Stützfläche (3) des Schließkörpers (4) durch die Stirnfläche eines am Schließkörper (4) angeformten Kragens (7) gebildet wird, der von einem in den äußeren Bohrungsabschnitt eingeführten und an den Innenrand des Kragens (7) angelegten Werkzeug in Richtung der Ausnehmung (5) plastisch aufgespreizt wird, bis die Stützfläche (3) des Schließkörpers (4) sich in die Ausnehmung (5) erstreckt.

## Claims

1. Closing device including a closing member (4) press fitted into a channel of a housing (6), the outside periphery of the closing member including at least one indentation (9) into which, during press fitting the closing member (4) into the channel, basic material of the housing (6) is deformed to provide a form lock, and the channel is configured as a stepped bore having an outside bore portion (1) of large diameter that is remote from the pressure fluid side which, through a step, is followed by an inside bore portion (8) of smaller diameter that is close to the pressure fluid side, and wherein the closing member (4) has two piston portions of differently large diameters which correspond to the two bore portions (1,8), and the indentation (9) provided between the piston portions is undercut relative to the small diameter portion, and the basic material is pressed by plastic deformation into the indentation to provide the form lock,
**characterized** in that the outside bore portion (1) remote from the pressure fluid side includes at least one supporting surface (2), which is part of a recess (5) in the housing (6), on which a supporting surface (3) of the closing member (4), directed to the outside of the housing, abuts by way of expansion.

2. Closing device as claimed in claim 1,
**characterized** in that the supporting surface (2) arranged on the outside bore portion (1) is contacted by a collar (7) on the closing member (4), the end surface of the collar representing the supporting surface (3) of the closing member (4).

3. Closing device as claimed in claim 2,
**characterized** in that the collar (7) is engaged into the recess (5).

4. Method of closing pressure fluid conveying channels in a housing (6) by a closing member (4) press fitted into a channel, the outside periphery of the closing member including at least one indentation (9) into which, during press fitting the closing member (4) into the channel, basic material of the housing (6) is deformed to provide a form lock, and the channel is configured as a stepped bore having an outside bore portion (1) of large diameter that is remote from the pressure fluid side which, through a step, is followed by an inside bore portion (8) of smaller diameter that is close to the pressure fluid side, and wherein the closing member (4) has two piston portions of differently large diameters which correspond to the two bore portions, and the indentation (9) provided between the piston portions is undercut relative to the small diameter portion, and the basic material is pressed by plastic deformation into the indentation to provide the form lock, wherein the closing member (4), by the action of a press-in force of a defined direction and magnitude, performs an advancing movement in the direction of the inside bore portion (8), and the housing material which provides the plastic form lock at the indentation (9) in the closing member (4) is deformed into the indentation (3) as a result of force applied to the closing member (4),
**characterized** in that subsequently a supporting surface (3) on the closing member (4), which is directed to the outside of the housing, is expanded into a recess (5) in the outside bore portion (1).

5. Method as claimed in claim 4,
**characterized** in that the supporting surface (3) of the closing member (4) directed to the outside of the housing is the end surface of a collar (7) formed on the closing member (4), the collar (7) being plastically expanded in the direction of the recess (5) by a tool inserted into the outside bore portion and moved to bear against the inside rim of the collar (7) until the supporting surface (3) of the closing member (4) extends into the recess (5).

## Revendications

1. Dispositif d'obturation, constitué d'un obturateur (4) qui est emboîté à force dans un conduit d'un boîtier (6) et sur la périphérie extérieure duquel est disposée au moins une partie formée en retrait (9) dans laquelle, lorsqu'on enfonce l'obturateur (4) dans le conduit, de la matière de base du boîtier (6) est refoulée de façon à réaliser une solidarisation par complémentarité de formes, le conduit étant réalisé sous forme d'un alésage étagé dont une section d'alésage extérieure (1) de plus grand diamètre, orientée à l'opposé du côté du fluide sous pression, se raccorde au moyen d'un épaulement à une section d'alésage intérieure (8) de plus petit diamètre, orientée du côté du fluide sous pression, tandis que l'obturateur (4) comporte deux sections en forme de piston, de diamètres de grandeurs différentes et correspondant aux deux sections d'alésage (1, 8), entre lesquelles est réalisée la partie formée en retrait (9) qui est en contre-dépouille par rapport au plus petit diamètre et dans laquelle la matière de base réalisant la solidarisation par complémentarité de formes est repoussée à force par déformation plastique, caractérisé en ce que, sur la section d'alésage extérieure (1) orientée à l'opposé du côté du fluide sous pression, il est prévu au moins une surface d'appui (2) qui fait partie d'un logement (5) ménagé dans le boîtier (6) et sur laquelle prend appui, au moyen d'un élargissement, une surface d'appui (3) de l'obturateur (4) qui est orientée vers le côté extérieur du boîtier.

2. Dispositif d'obturation suivant la revendication 1, caractérisé en ce qu'un collet (7), qui est réalisé sur l'obturateur (4) et dont la surface frontale forme la surface d'appui (3) de l'obturateur (4), vient en contact sur la surface d'appui (2) ménagée sur la section d'alésage extérieure (1).

3. Dispositif d'obturation suivant la revendication 2, caractérisé en ce que le collet (7) s'accroche dans le logement (5).

4. Procédé d'obturation de conduits, ménagés dans un boîtier (6) et transportant un fluide sous pression, au moyen d'un obturateur (4) qui doit être emboîté à force dans un conduit et sur la périphérie extérieure duquel est disposée au moins une partie formée en retrait (9) dans laquelle, lorsqu'on enfonce l'obturateur (4) dans le conduit, de la matière de base du boîtier (6) est refoulée de façon à réaliser une solidarisation par complémentarité de formes, le conduit étant réalisé sous forme d'un alésage étagé dont une section d'alésage extérieure (1) de plus grand diamètre, orientée à l'opposé du côté du fluide sous pression, se raccorde au moyen d'un épaulement à une section d'alésage intérieure (8) de plus petit diamètre, orientée du côté du fluide sous pression, tandis que l'obturateur (4) comporte deux sections en forme de piston, de diamètres de grandeurs différentes et correspondant aux deux sections d'alésage (1, 8), entre lesquelles est réalisée la partie formée en retrait (9) qui est en contre-dépouille par rapport au plus petit diamètre et dans laquelle la matière de base réalisant la solidarisation par complémentarité de formes est repoussée à force par déformation plastique, l'obturateur (4) exécutant, sous l'action d'une force d'enfoncement de direction et grandeur définies, un mouvement d'avance dirigé dans la section d'alésage intérieure (8), tandis que la matière du boîtier qui réalise la solidarisation par complémentarité de formes de type plastique sur la partie formée en retrait (9) de l'obturateur (4) est refoulé dans la partie formée en retrait (9), caractérisé en ce qu'ensuite, une surface d'appui (3) située sur l'obturateur (4) et orientée vers le côté extérieur du boîtier est élargie dans un logement (5) ménagé sur la section d'alésage extérieure (1).

5. Procédé suivant la revendication 4, caractérisé en ce que la surface d'appui (3) de l'obturateur (4) qui est orientée vers le côté extérieur du boîtier est formée par la surface frontale d'un collet (7) qui est formé sur l'obturateur (4) et qui est élargi d'une manière plastique en direction du logement (5), par un outil introduit dans la section d'alésage extérieure et appliqué sur le bord intérieur du collet (7), jusqu'à ce que la surface d'appui (3) de l'obturateur (4) s'étende dans le logement (5).
